# FASCICULE DE BREVET EUROPEEN

(11) **EP 0 564 334 B1**
(45) Date de publication et mention de la délivrance du brevet: **08.11.1995**
(21) Numéro de dépôt: 93400786.5
(22) Date de dépôt: 26.03.1993
(51) Int. Cl.: H01T 1/12, H02H 3/04

(54) **Dispositif pour la détection et la signalisation d'un courant de défaut dans un parafoudre ou un isolateur**
Nachweis- und Signalisierungsvorrichtung eines Fehlerstroms in einem Überspannungsableiter oder einem Isolator
Device for detecting and indicating a fault current in an arrester or insulator

(30) Priorité: 30.03.1992 FR 9203808; 10.04.1992 FR 9204428
(43) Date de publication de la demande: 06.10.1993
(73) Titulaire: SEDIVER, SOCIETE EUROPEENNE D'ISOLATEURS EN VERRE ET COMPOSITE, F-92017 Nanterre Cédex (FR)
(72) Inventeur: Joulie, René, F-03200 Vichy (FR); Parraud, René, F-63290 Puy Guillaume (FR); Tartier, Serge, F-03300 Cusset (FR)
(74) Mandataire: Laroche, Danièle

(56) Documents cités:
- FR-A- 970 979
- FR-A- 2 603 418
- GB-A- 1 005 040

## Description

La présente invention concerne un dispositif pour la détection et la signalisation d'un courant de défaut dans un parafoudre ou un isolateur. Elle s'applique en particulier à la surveillance des lignes aériennes moyenne et haute tension. Elle vise tous les genres d'isolateurs; elle vise également tous les genres de parafoudres, qu'ils soient connectés directement entre la phase et la terre, ou qu'ils soient en série avec un intervalle d'air entre la phase et la terre. Les isolateurs peuvent être en verre, en céramique, ou en composite; les parafoudres peuvent être à enveloppe céramique ou composite, par exemple conformes aux brevets européens EP 304 690 et EP 397 163.

Le problème est de rendre facilement visible à un observateur le fait que le parafoudre ou l'isolateur soit traversé par un courant de défaut continu, ou à fréquence industrielle, dont la valeur soit par exemple au moins de l'ordre de l'ampère. Le dispositif de détection doit être par ailleurs insensible à des chocs de courant dûs à la foudre, présentant une amplitude très grande (plusieurs dizaines de Kiloampères) mais une durée extrêmement courte (de l'ordre de la microseconde), chocs pour lequel, entre autres, le parafoudre est conçu.

On connaît par la demande de brevet français FR-A-2 652 457 un parafoudre muni d'un indicateur visuel de défaut. On utilise le fait que l'enveloppe du parafoudre gonfle sous la pression des gaz engendrés par la mise en court-circuit interne du parafoudre. Un bracelet déformable entourant ladite enveloppe se trouve expulsé sous l'effet du gonflement.

Un tel indicateur présente l'inconvénient de ne fonctionner que pour des courants de défaut de plusieurs centaines d'ampères entraînant des gonflements substantiels ; il manque donc de sensibilité.

On connaît aussi par la demande de brevet français FR-A- 2 603 418 un indicateur pour la signalisation de la mise en court-circuit d'un parafoudre comprenant une bande colorée, élastiquement déformable, maintenue éclipsée contre la base du parafoudre par un mécanisme de verrou. Le verrou est associé à un filtre électrique interne au parafoudre qui, sous l'effet d'un courant de défaut, provoque la fusion d'un fil qui libère le verrou ; la bande colorée se projette alors en dehors du parafoudre.

Un tel indicateur a pour inconvénient de ne pas fonctionner pour des courants de défaut de l'ordre de l'ampère et de créer à ses bornes une tension électrique qui, en cas de choc de courant dû à la foudre, modifie le niveau de protection pour lequel le parafoudre est conçu.

La présente invention a pour but de réaliser un dispositif de détection plus précis que les dispositifs précédents, susceptible de se déclencher sous l'effet d'un courant de défaut de relativement faible intensité, de l'ordre 1 ampère ou plus, continu ou à fréquence industrielle (48 à 62 Hz), quelle que soit la valeur de la tension appliquée au parafoudre et quel que soit le genre de parafoudre.

La présente invention a pour objet un dispositif pour la détection et la signalisation d'un courant de défaut dans un parafoudre ou un isolateur, courant continu ou à fréquence industrielle, caractérisé par le fait qu'il comprend, dans un boîtier incorporant une pièce métallique reliée électriquement à une ferrure d'extrémité du parafoudre ou de l'isolateur et muni d'une fenêtre frangible :
- un transformateur dudit courant dont le primaire est constitué par ladite pièce métallique, et dont le secondaire est relié à un circuit d'écrétage pour rendre inopérantes des impulsions de courant dues à des surtensions correspondant notamment à des chocs de foudre,
- une résistance chauffante alimentée par ledit transformateur et constituant un inflammateur pour une substance pyrotechnique dans laquelle elle est noyée, ladite substance étant destinée à rompre ladite fenêtre frangible.

L'absence de ladite fenêtre frangible constitue un moyen de signalisation du courant de défaut. Mais, pour faciliter encore la surveillance du parafoudre ou de l'isolateur, on prévoit avantageusement dans ledit boîtier un moyen de signalisation supplémentaire susceptible de se trouver libéré par la rupture de ladite fenêtre frangible.

Selon un perfectionnement, ledit moyen de visualisation est une bande ou un drapeau coloré, lesté, en matériau éventuellement ignifugé.

Selon une variante, ladite pièce métallique fait partie intégrante de ladite ferrure d'extrémité du parafoudre ou de l'isolateur.

Dans tous les modes de réalisation ladite résistance et ladite substance pyrotechnique peuvent être calibrées de manière que le dispositif se déclenche à partir d'un courant de défaut de l'ordre 1 ampère pendant une durée minimale supérieure à 10 millisecondes.

Selon un perfectionnement, on prévoit un système de comptage desdites impulsions de courant, branché en parallèle avec ledit circuit d'écrétage.

D'autres caractéristiques et avantages de l'invention apparaîtront au cours de la description suivante d'un mode de réalisation donné à titre illustratif mais nullement limitatif. Dans le dessin annexé :
- La figure 1 est une vue schématique en élévation d'un parafoudre avec son dispositif de détection et de signalisation visible après déclenchement.
- La figure 2 est un schéma électrique des éléments essentiels d'un dispositif de détection et de signalisation selon l'invention.
- Les figures 3 et 4 sont des vues partielles schématiques en coupe, respectivement de face et de dessus du dispositif de détection et de signalisation selon l'invention, avant déclenchement.
- La figure 5 est une vue analogue à la figure 3, montrant le dispositif de détection et de signalisation après déclenchement, c'est-à-dire après apparition d'un courant de défaut.

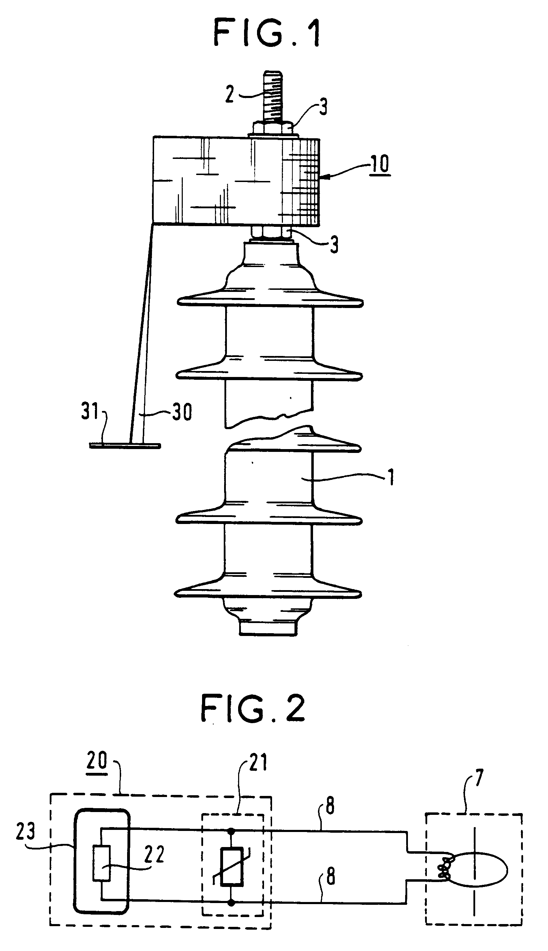

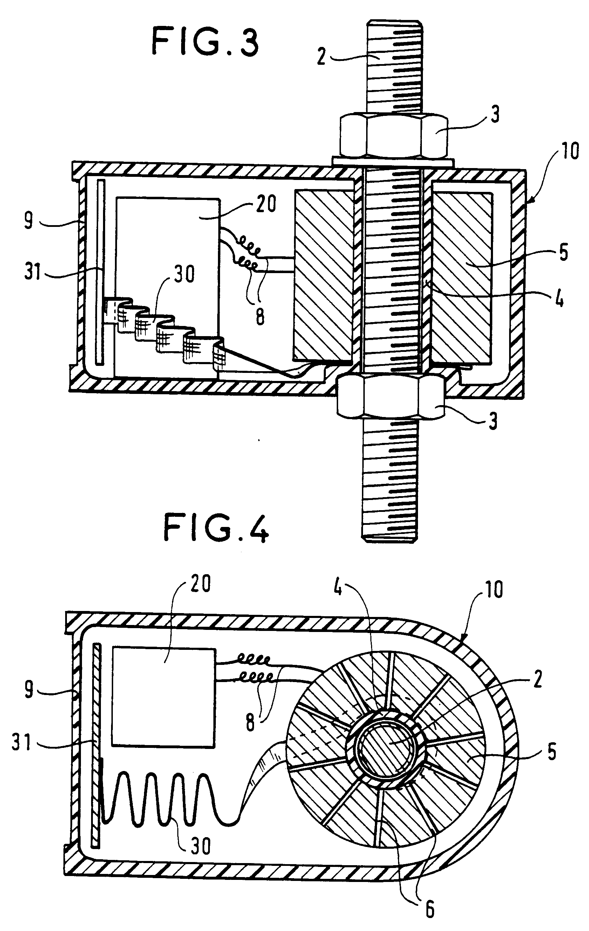

On voit dans la figure 1 un parafoudre 1 dont une ferrure d'extrémité est munie d'une tige métallique filetée 2. Sur celle-ci est enfilé, injecté ou collé, un boîtier 10 étanche en matériaux synthétiques, visible plus en détail en coupe dans les figures 3 et 4. Le boîtier 10 est immobilisé sur la tige 2 par des écrous 3. Il comprend une fenêtre frangible 9, par exemple une paroi dont les bords ont été affaiblis, et qui est susceptible d'être expulsée sous l'effet d'une surpression à l'intérieur du boîtier 10.

Le boîtier 10 définit intérieurement une cheminée 4 contenant la tige 2 et entourée d'un tore magnétique 5 sur lequel sont bobinées quelques spires 6 définissant le secondaire d'un transformateur d'intensité 7 dont le primaire est constitué par la tige 2. Les bornes 8 du secondaire du transformateur 7 sont connectées à l'entrée d'un ensemble 20, dont le schéma électrique apparaît dans la figure 2. Cet ensemble contient un circuit d'écrétage 21, qui est constitué soit d'une varistance, soit d'une diode Zener, soit d'un éclateur, avec en parallèle une résistance 22 noyée dans une substance pyrotechnique 23. On peut prévoir, en parallèle avec le circuit d'écrétage 21, un système de comptage d'impulsions.

Lorsqu'un courant de défaut continu ou à fréquence industrielle traverse le parafoudre 1, et par conséquent la tige 2, un courant est généré dans les spires 6 (selon le rapport d'intensité choisi pour le transformateur 7), et alimente la résistance électrique 22. Si la température de cette résistance atteint la valeur critique choisie, la substance pyrotechnique explose et crée une surpression dans le boîtier 10 qui éjecte la fenêtre frangible 9.

En cas de choc dû à la foudre, il apparaît dans la tige 2, pendant un temps très court, une impulsion de courant de l'ordre de plusieurs centaines à plusieurs milliers d'ampères ; le potentiel aux bornes de la résistance 22 croît alors de façon telle que le circuit d'écrétage 21 devient opérant et dévie une grande partie du courant. Il n'y a donc pas déclenchement du dispositif de détection selon l'invention.

Les différents paramètres du circuit de la figure 2 sont choisis pour que l'on puisse détecter un courant de défaut de 1 ampère dont la durée soit supérieure à 10 millisecondes.

Selon le mode de réalisation illustré permettant de rendre la visualisation plus aisée à un observateur qui se trouve en bas du poteau supportant le parafoudre 1, on prévoit dans le boîtier 10 un ruban ou un drapeau ignifugé coloré 30, dont l'extrémité est munie d'un lest 31 ; cet ensemble se trouve également éjecté avec la fenêtre 9 au moment du déclenchement.

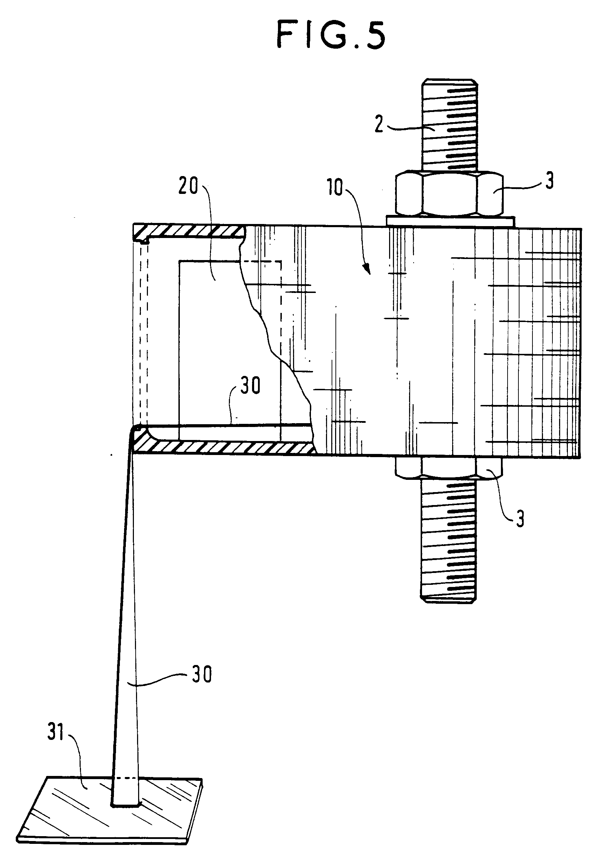

La figure 5 illustre le boîtier 10 après déclenchement.

Bien entendu l'invention n'est pas limitée au mode de réalisation qui vient d'être décrit. Le parafoudre 1 peut être substitué par un isolateur. La tige 2 peut être remplacée par une pièce métallique présentant une autre forme, du moment qu'elle est reliée électriquement à une ferrure d'extrémité du parafoudre ou de l'isolateur.

## Revendications

1. Dispositif pour la détection et la signalisation d'un courant de défaut dans un parafoudre ou un isolateur, courant continu ou à fréquence industrielle, caractérisé par le fait qu'il comprend, dans un boîtier (10) incorporant une pièce métallique (2) reliée électriquement à une ferrure d'extrémité (1) du parafoudre ou de l'isolateur et muni d'une fenêtre frangible (9):
- un transformateur (7) dudit courant dont le primaire est constitué par ladite pièce métallique (2), et dont le secondaire (8) est relié à un circuit d'écrétage (21) pour rendre inopérantes des impulsions de courant dues à des surtentions correspondant notamment à des chocs de foudre,
- une résistance chauffante (22) alimentée par ledit transformateur (7), et constituant un inflammateur pour une substance pyrotechnique (23) dans laquelle elle est noyée, ladite substance étant destinée à rompre la dite fenêtre frangible (9).

2. Dispositif selon la revendication 1, caractérisé par le fait que ledit boîtier contient en outre un moyen de signalisation (30) susceptible de se trouver libéré par la rupture de ladite fenêtre frangible.

3. Dispositif selon l'une des revendications 1 et 2, caractérisé par le fait que ledit moyen de visualisation est une bande ou un drapeau coloré, lesté, en matériau éventuellement ignifugé.

4. Dispositif selon l'une des revendications 1 à 3, caractérisé par le fait que ladite pièce métallique (2) fait partie intégrante de ladite ferrure d'extrémité du parafoudre ou de l'isolateur.

5. Dispositif selon l'une des revendications précédentes, caractérisé par le fait qu'il comprend en outre un système de comptage desdites impulsions de courant branché en parallèle avec ledit circuit d'écrétage.

6. Dispositif selon l'une des revendications précédentes, caractérisé par le fait que ladite résistance et ladite charge pyrotechnique sont calibrées de manière que le dispositif se déclenche à partir d'un courant de fuite de l'ordre 1 ampère pendant une durée minimale supérieure à 10 millisecondes.

## Patentansprüche

1. Vorrichtung zur Erfassung und Signalisierung eines Leckstroms in einem Blitzableiter oder Isolator, wobei der Leckstrom ein Gleichstrom oder ein Netzwechselstrom ist, dadurch gekennzeichnet, daß die Vorrichtung in einem Gehäuse (10), das ein elektrisch an eine Endarmatur (1) des Blitzableiters oder Isolators angeschlossenes Metallteil (2) inkorporiert und ein zerbrechliches Fenster (9) besitzt, folgende Elemente enthält:
- einen Transformator (7) für den Strom, dessen Primärteil von dem Metallteil (2) gebildet wird und dessen Sekundärteil an eine Begrenzerschaltung (21) angeschlossen ist, um die Stromimpulse bei Überspannungen aufgrund insbesondere von Blitzeinschlägen wirkungslos zu machen,
- einen Heizwiderstand (22), der von dem Transformator (7) gespeist wird und einen Zünder für eine pyrotechnische Substanz (23) bildet, in die der Widerstand eingebettet ist und die das zerbrechliche Fenster (9) zum Brechen bringen soll.

2. Vorrichtung nach Anspruch 1, dadurch gekennzeichnet, daß das das Gehäuse außerdem ein Signalisierungsmittel (30) enthält, das durch das zerbrechende Fenster ausgestoßen wird.

3. Vorrichtung nach Anspruch 2, dadurch gekennzeichnet, daß das Signalisierungsmittel ein farbiges Band oder eine farbige Fahne mit einem Ballast ist, ggf. aus feuerhemmenden Material.

4. Vorrichtung nach einem der Ansprüche 1 bis 3, dadurch gekennzeichnet, daß das Metallteil (2) integrierender Bestandteil der Endarmatur des Blitzableiters oder Isolators ist.

5. Vorrichtung nach einem der vorhergehenden Ansprüche, dadurch gekennzeichnet, daß sie weiter ein System zum Zählen der Stromimpulse besitzt, das parallel zur Begrenzerschaltung angeschlossen ist.

6. Vorrichtung nach einem der vorhergehenden Ansprüche, dadurch gekennzeichnet, daß der Widerstand und die pyrotechnische Substanz so bemessen sind, daß die Vorrichtung bei einem Leckstrom in der Größenordnung von 1 A auslöst, sofern dieser während mindestens 10 ms andauert.

## Claims

1. A device for detecting and indicating a fault current flowing through a lightning arrestor or an insulator, the current being DC or at AC mains frequency, the device being characterized by the fact that it comprises, inside a box (10) provided with a frangible window (9) and that has a piece of metal (2) electrically connected to an end fitting (1) of the lightning arrestor or of the insulator passing therethrough:
a transformer (7) for transforming said current, the primary of the transformer being constituted by said piece of metal (2), and the secondary (8) of the transformer being connected to a peak-limiting circuit (21) to make pulses of current due to surges corresponding, in particular, to lightning strikes inoperative; and
a heating resistance (22) fed by said transformer (7) and constituting an igniter for a pyrotechnic composition (23) in which it is embedded, said composition being designed to break said frangible window (9).

2. A device according to claim 1, characterized by the fact that said box also contains indicator means (30) suitable for being released by the rupture of said frangible window.

3. A device according to claim 2, characterized by the fact that said indicator means is a colored and weighted strip or flag of material that may optionally be made fireproof.

4. A device according to any one of claims 1 to 3, characterized by the fact that said piece of metal (2) is an integral portion of the said end fitting of the lightning arrestor or of the insulator.

5. A device according to any preceding claim, characterized by the fact that it further includes a system for counting said current pulses and connected in parallel with said peak-limiting circuit.

6. A device according to any preceding claim, characterized by the fact that said resistance and said pyrotechnic composition are calibrated so that the device triggers for a leakage current of about 1 amp that lasts for a minimum duration of not less than 10 milliseconds.
